# EUROPEAN PATENT APPLICATION

(11) **EP 4 477 872 A1**
(43) Date of publication of application: **18.12.2024**
(21) Application number: 24181606.5
(22) Date of filing: 12.06.2024
(51) Int. Cl.: F03D 7/02, F03D 7/04

(54) **HIGH CAPACITY FACTOR WINDFARM**

(30) Priority: 14.06.2023 DK PA202370291
(71) Applicant: Vattenfall AB, 169 92 Stockholm (SE)
(72) Inventor: HJORT, Thomas, 6000 Kolding (DK)
(74) Representative: Zacco Denmark A/S

(57) **Abstract**

Energy production site and method of operation thereof involving main wind turbines and booster wind turbines. Main wind turbines produce electrical power in all of a first primary wind speed range and are configured to produce electrical power up to a desired level maximum. Booster wind turbines are configured to produce electrical power in all of a lower second primary wind speed range and within a higher second secondary wind speed range. The booster turbines' production of electrical power increases with wind speed within the second primary wind speed range and decreases with wind speed in the second secondary wind speed range.

## Description

The present invention relates to an energy production site comprising wind turbines of two different groups being main wind turbines and booster wind turbines, respectively, more particularly to an energy production site configuration and methods, in which the energy extraction capacity per unit area is increased compared to energy sites known in the art.

### Background of the invention

There is an increasing pressure to utilise the full potential of a site area when constructing an energy production site, such as a windfarm. However, the large size of modern wind turbines means that there must be a significant distance between such wind turbines to prevent a negative impact on the production from a given wind turbine from influence from neighbouring wind turbines, for instance due to turbulence, wake effects and shadow effects, etc.

This means that a significant part of the site area is "wasted" and that there is room for optimising the overall amount of energy produced per unit area of the energy production site. Therefore, it is not unusual to supplement the wind turbines with other forms of production, such as photovoltaic installations for electricity production or seaweed farming, if it is an offshore energy production site.

A need for better utilisation of an area, which is allocated for an energy production site, can also exist if, for instance for geographical or transportation related reasons, it is not possible to install many and big enough wind turbines within the area to utilise the nominal power rating of the energy transmission line available for the energy production site.

### Summary - Brief description of the invention

It is a purpose of the present invention to provide an energy production site configuration and methods, which increases the energy extraction capacity per unit area of the energy production site compared to energy productions sites known within the art.

The present invention relates to an energy production site comprising a first group of wind turbines to be operated as main wind turbines, and a second group of wind turbines to be operated as booster wind turbines, wherein the main wind turbines are configured to produce electrical power in all of a first primary wind speed range, wherein the main wind turbines are configured to produce electrical power up to a desired level, wherein the booster wind turbines are configured to produce electrical power in all of a second primary wind speed range and within a second secondary wind speed range, which is higher than and non-overlapping with said second primary wind speed range, wherein the booster turbines' production of electrical power increases with wind speed within the second primary wind speed range and decreases with wind speed in the second secondary wind speed range.

The energy production site may be referred to as a windfarm, such as an offshore windfarm or an onshore windfarm, or as a park etc. The energy production site may be defined as an area where more wind turbines operate together, thus there may be a combined energy production at the site and there may be a central export of produced energy. The energy production site may be a physical, geographical area. The energy production site may include an export system (export infrastructure). The export system may alternatively be an on-site interface of an energy export system. The export system is operable to export electrical energy from the energy production site. The export system may be a single export system common to the site, operable to export of all electric power from the site or at least all electric power produced for continuous export to an off-site receiver of electric power.

In prior art, in a typical offshore windfarm, wind turbines with a given rating are provided to achieve the full power rating of the park, which is normally constrained by the export system capacity or by the criteria under which the windfarm is defined or where it involves excessive wake losses or is constrained by the number of turbines that can be fitted without exceeding design loads.

The design of the wind turbine generator is defined by a rotor size and a turbine rating, where the design optimum normally result in a capacity factor of the individual turbine which is close to 50%, and where the resulting windfarm will end at effectively the same range. This means that the full energy capacity is limited to about half, and the export assets are not fully utilized. In prior art, a normal "overplanting" of a windfarm can be performed, in which the wind farm comprises an excess number of wind turbines, such as 20% extra and typically all of the same type, compared to the number theoretically needed when considering the maximum power rating of the individual wind turbines.

The present disclosure intends to increase the energy yield of the windfarm by adding purpose designed turbines that can boost production at low wind speeds without increasing the power rating of the overall park. The added turbines may use a park in park methodology, where for every main, e.g. large, wind turbine generator one or more booster, e.g. smaller, turbines are added that may have a power curve that may only be targeted at production up until approximately half of the main wind turbine generators, whereafter it may be curtailed into a low wear mode. The sum of power generated by the main wind turbine generators and by the added "booster" wind turbine generators will be limited to the max rating of the main wind turbine generators.

The limitation may be determined for each main wind turbine, and/or the limitation may be determined at park level as well.

The booster wind turbines may be connected to the main wind turbines with a specific scaling, to be able to reuse the electrical infrastructure of the site. The reuse of the electrical infrastructure may effectively be known as a hybrid park, but as a unique feature of the present invention, the second power production, i.e. the booster wind turbines, is also a wind turbine based system. In contrast, in prior art hybrid plants, the second source of production is solar energy, wave energy or similar.

The energy production site according to the present invention, will increase the capacity factor from the usual 50% up to about approximately 70% or even higher. In prior art, this can also normally be achieved by overplanting, but space constraints may limit that and the design of wind turbines in such setup will all experience design driving loads that results in a high cost. With the present application of the booster wind turbines, where the booster wind turbines may be designed for a significantly reduced load, this will thus reduce the cost of the wind turbines itself as well as the foundation it sits on. The rotor loading of the booster wind turbines may be approximately 0,33-0,5 times that of the main wind turbines. The operation and low need to withstand full turbulence loads means that onshore type wind turbines with a IEC 3 class, or one designed for even lower mean wind speeds, can be deployed, which gives a low cost point with a standard product.

Thus, the booster wind turbines may be configured to produce electrical power at wind speeds in a second primary range of operation, such as configured to primarily produce electrical power at wind speeds in a second primary range of operation. These wind speeds may be lower wind speeds, such as below 13 m/s. However, the booster wind turbines may also be configured to operate at higher wind speeds, such as wind speed above 13 m/s, in a low wear state with a low loading for ensuring a long lifetime of the booster wind turbines. Thus, it is an advantage that the booster wind turbines may also be loaded in higher wind speeds, since this will both increase energy production, and also reduce the wear on the booster wind turbines, because it may be damaging to a wind turbine to stand still at higher wind speeds.

It is an advantage of the invention that a resulting energy plant with 90-100% capacity factor can be established, where the dependency on the wind speed is fully decoupled.

It is an advantage that production from wind energy can be provided in a full range of wind speeds, both lower wind speeds, middle wind speeds, high speeds and very high wind speed, and therefore energy production at lower wind speeds can be prioritized.

It is an advantage of the invention that it increases the energy extraction capacity per unit area of the energy production site compared to energy productions sites known within the art.

As a "low wear state" of the booster wind turbines would still lead to production at higher winds, the present invention may also provide that a storage, of any technology, facility may be included to absorb any excess production and deploy it when winds are so low that the combination of the main wind turbines and the booster wind turbines cannot maintain a power production at the full rating of the main wind turbines. Furthermore, this may also compensate for wake losses, blockage effects, availability loss from service operations, etc.

A "low wear state" of the main wind turbines may also be provided by unloading (curtailing) the main wind turbines to a certain level to reduce wear of the main wind turbines.

Further wave, solar or other production assets can be added to increase the capacity factor of the entire system even further, again still utilizing the same export infrastructure. The concurrency of production from various sources are limited at the full capacity of the main windfarm, or lower if requested by the overall park control, and the energy is used to charge the storage facility, that can then in turn deliver energy when production is lower than max or the limit set by the overall park control.

Thus, it is an advantage of the invention, that energy production at lower windspeeds is more valuable, and that the deployable power, e.g. as enabled by a storage, even higher.

The main wind turbines are configured to produce electrical power at wind speeds in a first primary range of operation, such as primarily produce electrical power at wind speeds in a first primary range of operation. The wind speeds in the first primary range of operation of the main wind turbines may be between about 2.5 m/s - 30 m/s. The main wind turbines may be configured to produce electrical power at wind speeds in a first primary range. However, the main wind turbines may also be configured to produce electrical power at wind speed outside this range.

The booster wind turbines are configured to produce electrical power at wind speeds in a second primary range of operation, such as primarily produce electrical power at wind speeds in a second primary range of operation. The wind speeds in the second primary range of operation of the booster wind turbines may be between about 2.5 m/s - 13 m/s. The booster wind turbines may be configured to produce electrical power at wind speeds in a second primary range. However, the booster wind turbines may also be configured to produce electrical power at wind speed outside this range.

Thus, the main wind turbines and the booster wind turbines are different groups or types of wind turbines. The primary range of operation of the main wind turbines and the booster wind turbines are different. The wind speeds at which the main wind turbines operate and at which the booster wind turbines operate may be different.

Typically, the main wind turbines may operate at any wind speeds, and may have a high energy production at high wind speeds. Typically, the booster wind turbines may operate in a reduced range of wind speeds compared to the main wind turbines, and the booster wind turbines may have a lower energy production at high wind speeds than the main wind turbines.

The sum of electrical power generated by the main wind turbines and the booster wind turbines is limited to the maximum rating of the main wind turbines. The resulting power production from the main wind turbines and the booster wind turbines is controlled to correspond, as far as possible, to a desired level.

The desired level may be a level defined as maximally the level determined by the maximum export system capability, but potentially reduced to match the price optimum operation of the windfarm, or to match the load characteristics of a connected load or consumption zone.

Thus, the desired level may be based on considerations relating to the physical design of the wind park, the market design, the hour-to-hour optimization depending on the varying load from the industry, etc., and wear considerations. The desired level may also be set at a lower value at lower wind speeds.

The resulting power production from the main wind turbines and the booster wind turbines may be set or determined at any time, such as on a daily basis, on an hourly basis, based on time of day, such as during the day or during the night, based on time of year, such as summer or winter etc.

By placing the second type wind turbines, which may be smaller booster wind turbines, between the first type wind turbines, which may be larger main wind turbines, the energy extraction capacity from the energy production site can be increased significantly, because the second type wind turbines can produce energy without significantly influencing the energy production of the first type wind turbines. Because the second type wind turbines are typically smaller than the first type wind turbines, the addition of the second type wind turbines has only limited impact on the turbulence and wake effects on the site. The difference in height means that the interference of the smaller wind turbines on the larger ones is limited. Because a significant part of the rotor area of the larger wind turbines may be situated above the rotors of the smaller wind turbines, the wake and turbulence impact of the larger wind turbines on the smaller wind turbines is limited, and normal considerations governing the layout of the energy production site do not apply.

If the wind turbines are suitably distributed between each other so that the integrity of both types of wind turbines is maintained, an increase of up to 40% of the installed capacity of the energy production site compared to an energy production site occupying the same area but comprising only the first type wind turbines may be obtained.

The type of the towers should be understood to include the height as well as the structure and all other features of the tower. The first and second type of tower can have the same or different structures, and they can belong to different IEC classes. This also means, for instance, that one or both types of towers may be configured to be supported by a floating foundation.

The rotor diameter of the second type of wind turbines may being smaller than the rotor diameter of the first type of wind turbines, and this means that the rated maximum power output of the second type wind turbines is smaller, such as at least 20%, for example at least 30% or at least 50% smaller, than the rated maximum power output of the first type wind turbines.

In some embodiments, the booster turbines may be configured to transition between production within the second primary wind speed range and production within the second secondary wind speed range at a transition wind speed, or in a transition wind speed range, lower than a lowest wind speed at which the main wind turbines' production of electric power is at the desired level.

In some embodiments, the desired level is one of:
- a maximum power rating of the energy production site;
- a maximum export system capability;
- a maximum export system capability reduced to match a price optimum operation of the windfarm.

It should be noted that a primary focus in this disclosure is on configurations and modes of operation involving the boosting of electric power production for delivery without delay (delay meaning for instance delay resulting from intermediate energy storage) externally of the energy production site via an export system. A secondary focus is on the possibility of combining the advantages of such an energy production site with the provision of a range of energy storage capabilities.

Thus, the desired level of the resulting power production may be a level defined as maximally the level determined by the maximum export system capability, but potentially reduced to match the price optimum operation of the windfarm, or potentially reduced to match the load characteristics of a connected load or consumption zone.

The desired level may be based on considerations relating to the physical design of the wind park, the market design, the hour-to-hour optimisation depending on the varying load from the industry, etc., and wear considerations. The desired level may also simply be set at a lower value at lower wind speeds.

In some embodiments, the maximum power rating of the energy production site is determined by the sum of the maximum power ratings of the main wind turbines and/or by limitations of the export system facilities.

In some embodiments, the booster turbines' production of electrical power increases with wind speed within all of the second primary wind speed range.

In some embodiments, the booster turbines' production of electrical power generally decreases with wind speed in the second secondary wind speed range, such that the booster turbines' production of electrical power is higher at a lowest wind speed boundary than at a highest wind speed boundary of the second secondary wind speed range.

In some embodiments, the booster turbines' production of electrical power decreases with wind speed in all of the second secondary wind speed range.

In some embodiments, the booster turbines' production of electrical power is added to the main turbines' electrical power production up to a combined electrical power production at the desired level.

In some embodiments, an upper limit of the second primary wind speed range is a lowest wind speed at which the combined electrical power production is at the desired level. A lower limit of the second secondary wind speed range may be adjacent to the upper limit of the second primary wind speed range.

In some embodiments, the wind speeds in the first primary range of operation of the main wind turbines are between about 2.5 m/s - 30 m/s, 5 m/s - 20 m/s, of 3 m/s - 25 m/s, or a different combination of one of the said lower boundary values with one of the said upper boundary values.

The wind speeds in the first primary range of operation of the main wind turbines may be between about 2.5 m/s - 30 m/s, such as between about 3 m/s - 29 m/s, such as between about 4 m/s - 28 m/s, such as between about 8 m/s - 22 m/s etc.

In some embodiments, the wind speeds in the second primary range of operation of the booster wind turbines are between about 2.5 m/s - 13 m/s, 5 m/s - 8 m/s or of 3 m/s - 7 m/s, of 3 m/s - 9 m/s, or a different combination of one of the said lower boundary values with one of the said upper boundary values.

Thus, the wind speeds in the second primary range of operation of the booster wind turbines are between about 2.5 m/s - 13 m/s, such as between about 3 m/s - 12 m/s, such as between about 4 m/s - 11 m/s, such as between about 5 m/s - 8.5 m/s etc.

In some embodiments, the second secondary wind speed range includes wind speeds of 10 m/s - 12 m/s or of 10 m/s - 17 m/s or of 9 m/s - 25 m/s, or a different combination of one of the said lower boundary values with one of the said upper boundary values.

In a preferable embodiment, the energy production site is an offshore windfarm.

Due to the existence of potentially very large main wind turbines, which are dedicated for offshore use, and the flat surface of the site area for offshore energy production sites, which reduces the height of the wind turbine towers needed to ensure that the wind turbine rotors are free of the "roughness constraints" known from many onshore energy production sites, the present invention is particularly suited for offshore installation. However, it could also find use on onshore energy production sites, where the conditions are suitable.

In some embodiments, the first group of wind turbines comprises one or more horizontal axis wind turbines, each comprising:
- a nacelle mounted on a wind turbine tower,
- a rotor comprising one or more wind turbine blades describing a rotor diameter and
- an electrical generator driven by the rotor for converting rotation thereof into electrical power, and.
wherein the second group of wind turbines comprises one or more wind turbines, each comprising:
- a rotor comprising one or more wind turbine blades and
- an electrical generator driven by the rotor for converting rotation thereof into electrical power.

Each wind turbine of the second group of wind turbines may also comprise a nacelle mounted on a wind turbine tower.

The rotor diameter of the second type of wind turbines may less than 60%, such as less than 55%, such as less than 50%, of the rotor diameter of the first type of wind turbines.

The rotor diameter of the second type of wind turbines may be between 40% and 60%, preferably between 45% and 55%, most preferred 50%, of the rotor diameter of the first type of wind turbines.

Rotor diameter differences within these ranges have proven to result in the optimum energy production capacity.

In some embodiments, the main wind turbines and the booster wind turbines are of different types, where the different types are one or more of:
- being produced by different manufacturers,
- being controlled by different types of control systems,
- being originally produced as onshore and offshore wind turbines, respectively,
- being designed for different loads,
- belonging to different IEC classes,
- being fixedly mounted and floating, respectively,
- being horizontal axis and vertical axis wind turbines, respectively.

Whereas the first type wind turbines, i.e. the main wind turbines, are preferably of a type that would be chosen for optimising the energy production of the energy production site, if it had only comprises these first type wind turbines, the second type wind turbines, i.e. the booster wind turbines, can be of a less expensive type, such as older models and types, which are no longer "state-of-the-art". Even "second-hand" wind turbines, which have previously been used at other energy production sites, can be used as second type wind turbines in an energy production site according to the present invention. Also, onshore wind turbines, which typically have a higher production volume and therefore are more cost competitive, can be used as second type wind turbines in an offshore energy production site according to the present invention.

Typically, the first type of wind turbines, i.e. the main wind turbines are configured to operate at any wind speed, including high wind speeds, such as wind speeds above 10 m/s, 11 m/s, 12 m/s, 13 m/s etc. Typically, the second type of wind turbines, i.e. the booster wind turbines are configured to operate at lower wind speeds, such as wind speeds below 10 m/s, 11 m/s, 12 m/s, 13 m/s etc.

In some embodiments, the maximum power production of each of the booster wind turbines is lower than the maximum power production of each of the main wind turbines, such than less than 70% or less than 50% of the power production of each of the main wind turbines.

In some embodiments, for the sake of longevity, the booster wind turbines are configured to produce electric power at wind speeds above the second primary range of operation, even if this power production is not needed for boosting the resulting power production to reach the desired level at the time of production.

Thus, the booster wind turbines may also be configured to operate at higher wind speeds, such as wind speed above 13 m/s, in a low wear state with a low loading for ensuring a long lifetime of the booster wind turbines.

In some embodiments, electrical power produced by further power production facilities, the further power production facilities being different from wind power, is configured to also be used for controlling the resulting power production to reach the desired level, if the combined power production from the main wind turbines and the booster wind turbines is insufficient to reach the desired level.

It is an advantage that further power production facilities can be used together with the power production from the wind turbines. The further power production facilities may be, for example, wave power from e.g. sea waves in an offshore production site, and/or solar power installations in the production site.

In some embodiments, the energy production site further comprises an energy storage facility configured to store excess power production, which is in excess after boosting the resulting power production to reach the desired level at the time of production, and to deploy the stored energy again, when the resulting power production from the main wind turbines, the booster wind turbines and, if present, the further power production facilities, is insufficient to reach the desired level.

It is an advantage that the energy production site further comprises an energy storage facility configured to store excess power production because in this way no produced power is wasted, and the produced power can be used at a time, when e.g. the wind speeds are too low to utilise the maximum rating of the main wind turbines. It is also an advantage that the energy storage facility may be configured to store excess power production to meet a desired level of production, in case the energy prices/market prices favour storage for the purpose of later usage.

As a "low wear state" of the booster wind turbines would still lead to production at higher winds, the present invention may also provide that a storage, of any technology, facility may be included to absorb any excess production and deploy it when winds are so low that the combination of the main wind turbines and the booster wind turbines cannot maintain a power production at the full rating of the main wind turbines. Furthermore, this may also compensate for wake losses, blockage effects etc.

Further wave, solar or other production assets can be added to increase the capacity factor of the entire system even further, again still utilizing the same export infrastructure. The concurrency of production from various sources are limited at the full capacity of the main windfarm, or lower if requested by the overall park control, and the energy is used to charge the storage facility, that can then in turn deliver energy when production is lower than max or the limit set by the overall park control.

Thus, it is an advantage of the invention, that energy production at lower wind speeds is more valuable, and that the deployable power, e.g. as enabled by a storage, even higher.

In some embodiments, for each main wind turbine one or more associated booster wind turbines is/are provided; and wherein one or more associated booster wind turbines, each of which potentially comprises an energy storage facility, are connected to a single main wind turbine at HVAC level by entry into the switch gear of the main wind turbine or, alternatively at DC level or at LVAC level.

It is an advantage that this increases the capacity factor of the wind farm without adding unnecessary costs, because the existing power transmission lines from the main wind turbines are also used for the power from the connected booster wind turbines.

In another aspect of the invention, it relates to a method of operating an energy production site to control production of electric power therein, comprising: operating a first group of wind turbines as main wind turbines; operating a second group of wind turbines as booster wind turbines; operating the main wind turbines to produce electrical power in all of a first primary wind speed range; operating the main wind turbines to produce electrical power up to a desired level; operating the booster wind turbines to produce electrical power in all of a second primary wind speed range and within a second secondary wind speed range, which is higher than and non-overlapping with said second primary wind speed range; operating the booster turbines' production of electrical power to increase with wind speed within the second primary wind speed range and to decrease with wind speed in the second secondary wind speed range.

Some embodiments further comprise storing, in an energy storage facility, excess power production, which is in excess after boosting a combined power production to reach the desired level at the time of production.

Some embodiments further comprise deploying energy stored in the energy storage facility when the resulting power production from the wind turbines of the first group, the booster wind turbines and, if present, the further power production facilities, is insufficient to reach the desired level.

Some embodiments further comprise obtaining the energy production site by adding new wind turbines to already existing wind turbines in an energy production site, and wherein either the added wind turbines are operated as booster wind turbines, and the already existing wind turbines are operated as main wind turbines, or wherein the added wind turbines are operated as main wind turbines, and the already existing wind turbines are operated as booster wind turbines.

In general, the method disclosed herein may be applied in an energy production site in accordance with the above description thereof. The method may comprise any method steps derivable from any implied or otherwise indicated method step or process therein.

In some embodiments, the desired level is one of: a maximum power rating of the energy production site; a maximum export system capability; or a maximum export system capability reduced to match a price optimum operation of the windfarm; and wherein the maximum power rating of the production site is determined by the sum of the maximum ratings of the wind turbines of the first group and/or by limitations of the export system facilities.

In some embodiments, the method further comprising: using electrical power produced by further power production facilities, the further power production facilities being different from wind power, for controlling the resulting power production to reach the desired level, if the combined power production from the wind turbines of the first group and the booster wind turbines is insufficient to reach the desired level.

In some embodiments, the method further comprising: storing, in an energy storage facility, excess power production, which is in excess after boosting the resulting power production to reach the desired level at the time of production.

In some embodiments, the method further comprising: deploying energy stored in the energy storage facility when the resulting power production from the wind turbines of the first group, the booster wind turbines and, if present, the further power production facilities, is insufficient to reach the desired level.

In some embodiments, the energy production site is obtained by adding new wind turbines to already existing wind turbines in an energy production site, and wherein either the added wind turbines are operated as booster wind turbines, and the already existing wind turbines are operated as main wind turbines, or wherein the added wind turbines are operated as main wind turbines, and the already existing wind turbines are operated as booster wind turbines.

### Figures

A few exemplary embodiments of the invention are described in more detail in the following with reference to the figures, of which
- Fig. 1: shows a schematic layout of an energy production site as known within the art, comprising a single type of wind turbines,
- Fig. 2: is a schematic side view of wind turbines of the energy production site shown in Fig. 1,
- Fig. 3: shows a schematic layout of an energy production site according to an embodiment of the invention, comprising two different groups of wind turbines,
- Fig. 4: is a schematic side view of wind turbines of the energy production site shown in Fig. 3,
- Fig. 5a-5d: schematically illustrate power curves for an energy production site comprising a first group of wind turbines operated as main wind turbines, and a second group of wind turbines operated as booster wind turbines.

### Detailed description of the invention

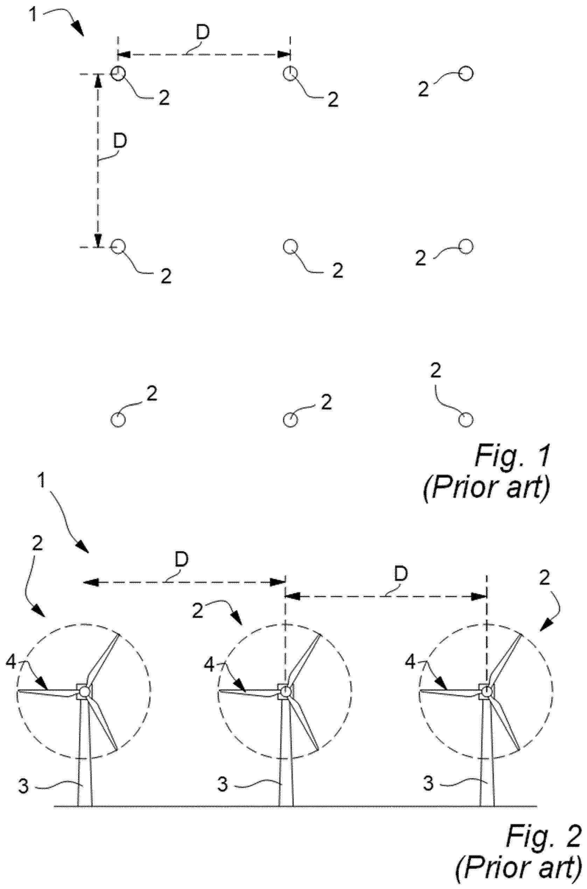

Fig. 1 shows a schematic layout of an energy production site 1 as known within the art, comprising a plurality of first type wind turbines 2. In the illustrated layout, the first type wind turbines 2 are arranged in straight lines forming a two-dimensional array, the distance D between any of the first type wind turbines 2 and it closest neighbouring first type wind turbine 2 being the same in both dimensions of this array. It should be noticed that this simplicity of the illustrated layout is merely chosen for the sake of clarity and that, as it will be known to the person skilled in the art, the first type wind turbines 2 may be distributed or scattered across the energy production site 1 in a various number of different ways and patterns, often depending on the landscape if the energy production site 1 is an onshore site 1.

Fig. 2 is a schematic front view of some first type wind turbines 2 of the energy production site 1 shown in Fig. 1. It illustrates that the first type wind turbines 2 are horizontal axis wind turbines comprising a first type tower 3 and a first type rotor 4. Fig. 2 shows how the first type rotor 4 describes a first rotor diameter RD1. Fig. 2 further illustrates that the distance D between two neighbouring first type wind turbines 2 is defined as the horizontal centre-to-centre distance D between two neighbouring first type towers 3.

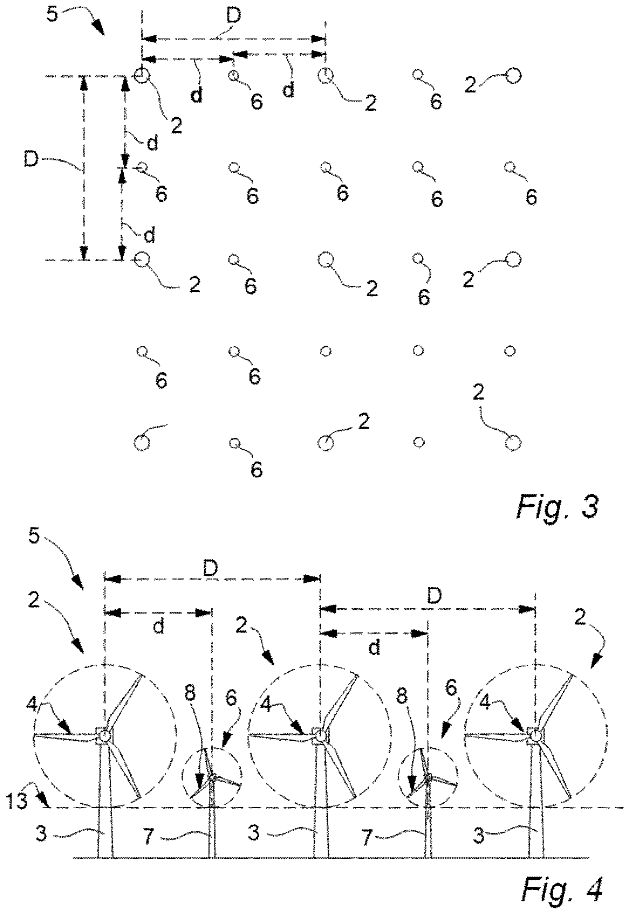

Fig. 3 shows a schematic layout of an energy production site 5 according to an embodiment of the invention, comprising two different groups of wind turbines 2, 6. The first group 2 of wind turbines are operated as main wind turbines, and the second group 6 of wind turbines are operated as booster wind turbines. The main wind turbines 2 are configured to produce electrical power at wind speeds in a first primary range of operation. The booster wind turbines 6 are configured to produce electrical power at wind speeds in a second primary range of operation. The sum of electrical power generated by the main wind turbines 2 and the booster wind turbines 6 is limited to the maximum rating of the main wind turbines 2. The resulting power production from the main wind turbines 2 and the booster wind turbines 6 is controlled to correspond, as far as possible, to a desired level.

In the illustrated layout, a plurality of first group wind turbines 2 are arranged in a two-dimensional array like in Fig. 1, and a plurality of second group wind turbines 6 are arranged in between the first group wind turbines 2 in such a way that the distance d between any of the second group wind turbines 6 and its closest neighbouring first group wind turbine 2 or second group wind turbine 6 is the same in both dimensions of this array. Again, it should be noticed that the simplicity of the illustrated layout of the energy production site 5 is merely chosen for the sake of clarity and that the first group wind turbines 2 and the second group wind turbines 6 may be distributed or scattered across the energy production site 5 in a various number of different ways and patterns. The important thing is not that the distance d to neighbouring wind turbines 2, 6 is the same in all directions, but that the distance d to each of the neighbouring wind turbines 2, 6 is sufficient to avoid significant disturbances in the form of turbulence, wake effects, shadow effects and the like.

Fig. 4 is a schematic front view of some first group wind turbines 2 and some second group wind turbines 6 of the energy production site 5 shown in Fig. 3. It illustrates that also the second group wind turbines 6 are horizontal axis wind turbines comprising a second type tower 7 and a second type rotor 8. Fig. 7 shows how the second type rotor 8 describes a second rotor diameter RD2. Fig. 4 further illustrates that the distance d between a second group wind turbine 6 and a neighbouring first group wind turbine 2 or second group wind turbine 6 is defined as the horizontal centre-to-centre distance d between the towers 3, 7 of the two wind turbines 2, 6 in question.

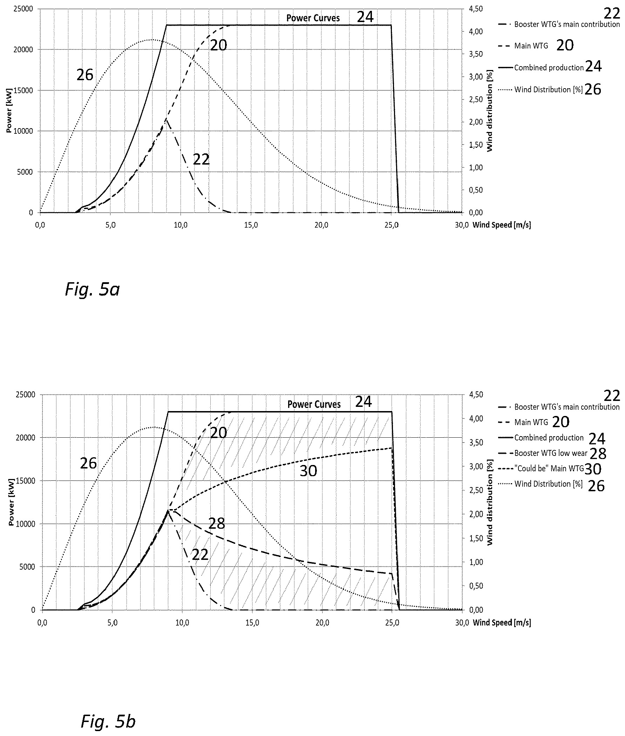

Fig. 5a and 5b schematically illustrate power curves for an energy production site comprising a first group of wind turbines operated as main wind turbines, and a second group of wind turbines operated as booster wind turbines. The main wind turbines are configured to produce electrical power at wind speeds in a first primary range of operation. The booster wind turbines are configured to produce electrical power at wind speeds in a second primary range of operation. The sum of electrical power generated by the main wind turbines and the booster wind turbines is limited to the maximum rating of the main wind turbines. The resulting power production from the main wind turbines and the booster wind turbines is controlled to correspond, as far as possible, to a desired level.

Fig. 5a and 5b show an increase in the energy yield of the windfarm by adding purpose designed turbines that can boost production at low windspeeds without increasing the power rating of the overall park. The added turbines may use a park in park methodology, where for every main wind turbine generator 20 ("Main WTG") one or more booster turbines 22 ("Booster WTG's main contribution") are added that have a power curve that may only be targeted at production up until approximately half of the main wind turbine generators, whereafter it may be curtailed into a low wear mode. The sum of power 24 ("Combined production") generated by the main wind turbine generators 20 and by the added "booster" wind turbine generators 22 will be limited to the max rating of the main wind turbine generators.

The wind resource occurrence 26 is shown as a graph as well ("Wind distribution [%]"). The graph 26 shows that most hours, the wind speed is between 5 m/s - 14 m/s.

Thus, the curve 20 is for the main wind turbine. It is shown for one single main wind turbine, but can be scaled by a factor of 100 and still hold.

The curve 22 is the combination of one or more booster wind turbines fit to a single main wind turbine, and scaled with that. It may be a single booster wind turbine or several individual booster wind turbines that adds up to the curve shown.

Fig. 5a shows an example of the power curve 22 of the booster wind turbines, where the booster wind turbines operate to generate power at wind speed up to 13 m/s, and when the wind speeds are above 13 m/s, then the booster wind turbines do not generate power.

Fig. 5b shows an example of the power curve 22 of the booster wind turbines, where the booster wind turbines operate to generate power also at wind speed above 13 m/s. At wind speeds above 9 m/s, the booster wind turbines generates less power than at wind speeds below 9 m/s. The power curve 20 of the main wind turbines accordingly shows that at wind speeds above 9 m/s, the main wind turbines produce less power than their maximum rating, because the combined production from the main wind turbines and the booster wind turbines have reached the maximum rating.

For the sake of longevity, the booster wind turbines are configured to produce electric power at wind speeds above the second primary range of operation, even if this power production is not needed for boosting the resulting power production to reach the desired level at the time of production. This may be called a low wear mode of the booster wind turbines.

The curve 28 ("Booster WTG low wear") is an example of a curve for the booster wind turbine(s) when designed for low loading/long lifetime/low wear.

The curve 28 may be the excess production from the combination of the main wind turbines and the booster wind turbines to achieve the combined production 24. This can be capitalized as energy used for storage and later deployment, for Power to X or the like, or as a reduction of the main wind turbine need, e.g. fewer main wind turbines, or with less load/wear, shown as the curve 20.

The curve 30 (""Could be" Main WTG) is the potential reduction of need for main wind turbines if the power production from the booster wind turbines above 9 m/s wind speeds, i.e. curve 28, is capitalized for this purpose, that could reduce cost of the main windfarm.

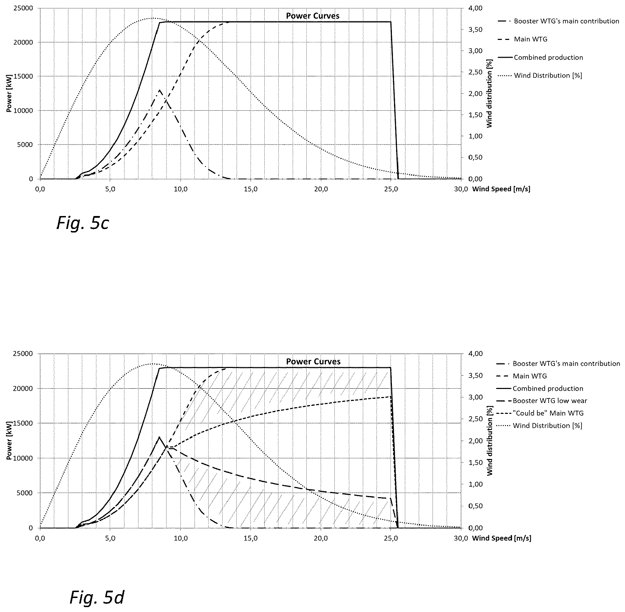

Figs. 5c and 5d show alternative characteristics for the booster wind turbines, wherein the increase of electrical power production with wind speed in the second primary wind speed range is steeper function of the wind speed, so that a desired level maximum in combined energy production is reached at even lower wind speeds, thus providing an even more efficient boost by the booster wind turbines to the combined production of electric power.

### Items

1. An energy production site comprising:
   - a first group of wind turbines to be operated as main wind turbines, and
   - a second group of wind turbines to be operated as booster wind turbines,
      wherein the main wind turbines are configured to produce electrical power in all of a first primary wind speed range,
      wherein the main wind turbines are configured to produce electrical power up to a desired level,
      wherein the booster wind turbines are configured to produce electrical power in all of a second primary wind speed range and within a second secondary wind speed range, which is higher than and non-overlapping with said second primary wind speed range,
      wherein the booster turbines' production of electrical power increases with wind speed within the second primary wind speed range and decreases with wind speed in the second secondary wind speed range.
2. The energy production site according to item 1, wherein the booster turbines are configured to transition between production within the second primary wind speed range and production within the second secondary wind speed range at a transition wind speed, or in a transition wind speed range, lower than a lowest wind speed at which the main wind turbines' production of electric power is at the desired level.
3. The energy production site according to any of the preceding items, wherein, the desired level is one of:
   - a maximum power rating of the energy production site;
   - a maximum export system capability.
4. The energy production site according to item 3, wherein the maximum power rating of the energy production site is determined by the sum of the maximum power ratings of the main wind turbines.
5. The energy production site according to any of the preceding items, wherein the booster turbines' production of electrical power increases with wind speed within all of the second primary wind speed range
6. The energy production site according to any of the preceding items, wherein the booster turbines' production of electrical power generally decreases with wind speed in the second secondary wind speed range, such that the booster turbines' production of electrical power is higher at a lowest wind speed boundary than at a highest wind speed boundary of the second secondary wind speed range.
7. The energy production site according to any of the preceding items, wherein the booster turbines' production of electrical power decreases with wind speed in all of the second secondary wind speed range.
8. The energy production site according to any of the preceding items, wherein the booster turbines' production of electrical power is added to the main turbines' electrical power production up to a combined electrical power production at the desired level.
9. The energy production site according to item 8, wherein an upper limit of the second primary wind speed range is a lowest wind speed at which the combined electrical power production is at the desired level.
10. The energy production site according to item 9, wherein a lower limit of the second secondary wind speed range is adjacent to the upper limit of the second primary wind speed range.
11. The energy production site according to any of the preceding items, wherein the first primary wind speed range includes wind speeds of 5 m/s - 20 m/s or of 3 m/s - 25 m/s, and
   wherein the second primary wind speed range includes wind speeds of 5 m/s - 8 m/s or of 3 m/s - 7 m/s or of 3 m/s - 9 m/s.
11. The energy production site according to any of the preceding items, wherein the second secondary wind speed range includes wind speeds of 10 m/s - 12 m/s or of 10 m/s - 17 m/s or of 9 m/s - 25 m/s.
12. The energy production site according to any of the preceding items, wherein the energy production site is an offshore windfarm.
13. The energy production site according to any of the preceding items, wherein the first group of wind turbines comprises one or more horizontal axis wind turbines, each comprising:
   - a nacelle mounted on a wind turbine tower,
   - a rotor comprising one or more wind turbine blades describing a rotor diameter and
   - an electrical generator driven by the rotor for converting rotation thereof into electrical power, and.
   wherein the second group of wind turbines comprises one or more wind turbines, each comprising:
   - a rotor comprising one or more wind turbine blades and
   - an electrical generator driven by the rotor for converting rotation thereof into electrical power.
14. The energy production site according to any of the preceding items, wherein the main wind turbines and the booster wind turbines are of different types, where the different types are one or more of:
   - being produced by different manufacturers,
   - being controlled by different types of control systems,
   - being originally produced as onshore and offshore wind turbines, respectively,
   - being designed for different loads,
   - belonging to different IEC classes,
   - being fixedly mounted and floating, respectively,
   - being horizontal axis and vertical axis wind turbines, respectively.
15. The energy production site according to any of the preceding items, wherein the maximum power production of each of the booster wind turbines is lower than the maximum power production of each of the main wind turbines, such than less than 70% or less than 50% of the power production of each of the main wind turbines.
16. The energy production site according to any of items 8-15, wherein, for the sake of longevity, the booster wind turbines are configured to produce electric power at wind speeds above the second primary range of operation, even if this power production is not needed for boosting the combined power production to reach the desired level at the time of production.
17. The energy production site according to any of items 8-16, wherein electrical power produced by further power production facilities, the further power production facilities being different from wind power, is configured to also be used for controlling the resulting power production to reach the desired level, if the combined power production from the main wind turbines and the booster wind turbines is insufficient to reach the desired level.
18. The energy production site according to any of the preceding items, further comprising an energy storage facility configured to store excess power production, which is in excess after boosting the resulting power production to reach the desired level at the time of production, and to deploy the stored energy again, when the resulting power production from the main wind turbines, the booster wind turbines and, if present, the further power production facilities, is insufficient to reach the desired level.
19. The energy production site according to any of the preceding items, wherein for each main wind turbine one or more associated booster wind turbines is/are provided; and wherein one or more associated booster wind turbines, each of which potentially comprises an energy storage facility, are connected to a single main wind turbine at HVAC level by entry into the switch gear of the main wind turbine or, alternatively at DC level or at LVAC level.
20. A method of operating an energy production site to control production of electric power therein, comprising:
   - operating a first group of wind turbines as main wind turbines,
   - operating a second group of wind turbines as booster wind turbines,
   - operating the main wind turbines to produce electrical power in all of a first primary wind speed range,
   - operating the main wind turbines to produce electrical power up to a desired level,
   - operating the booster wind turbines to produce electrical power in all of a second primary wind speed range and within a second secondary wind speed range, which is higher than and non-overlapping with said second primary wind speed range,
   - operating the booster turbines' production of electrical power to increase with wind speed within the second primary wind speed range and to decrease with wind speed in the second secondary wind speed range.
21. The method according to item 20, further comprising:
   - storing, in an energy storage facility, excess power production, which is in excess after boosting a combined power production to reach the desired level at the time of production.
22. The method according to item 12, further comprising:
   - deploying energy stored in the energy storage facility when the resulting power production from the wind turbines of the first group, the booster wind turbines and, if present, the further power production facilities, is insufficient to reach the desired level.
23. The method according to any of items 20-22, wherein the energy production site is obtained by adding new wind turbines to already existing wind turbines in an energy production site, and
   wherein either the added wind turbines are operated as booster wind turbines, and the already existing wind turbines are operated as main wind turbines, or
   wherein the added wind turbines are operated as main wind turbines, and the already existing wind turbines are operated as booster wind turbines.
24. The method according to any of items 20-23, wherein the energy production site is an energy production site according to any of items 1-19.

### List of references

1. Energy production site with a single type of wind turbines
2. First type wind turbine
3. First type tower
4. First type rotor
5. Energy production site with two different types of wind turbines
6. Second type wind turbine
7. Second type tower
8. Second type rotor
13. Common lower rotor limit
20. power of main wind turbine
22. power of booster wind turbine
24. sum of power of main and booster wind turbines 26. wind resource occurrence
28. power of booster wind turbine(s) when designed for low loading/long lifetime/low wear
30. potential reduction of need for main wind turbines if the power production from the booster wind turbines is as in curve 28
D. Distance between two neighbouring first type wind turbines
d. Distance between a second type wind turbine and a neighbouring first type wind turbine or second type wind turbine
RD1. First rotor diameter
RD2. Second rotor diameter

## Claims

1. An energy production site comprising:
- a first group of wind turbines to be operated as main wind turbines, and
- a second group of wind turbines to be operated as booster wind turbines,
wherein the main wind turbines are configured to produce electrical power in all of a first primary wind speed range,
wherein the main wind turbines are configured to produce electrical power up to a desired level,
wherein the booster wind turbines are configured to produce electrical power in all of a second primary wind speed range and within a second secondary wind speed range, which is higher than and non-overlapping with said second primary wind speed range,
wherein the booster turbines' production of electrical power increases with wind speed within the second primary wind speed range and decreases with wind speed in the second secondary wind speed range.

2. The energy production site according to claim 1, wherein the booster turbines are configured to transition between production within the second primary wind speed range and production within the second secondary wind speed range at a transition wind speed, or in a transition wind speed range, lower than a lowest wind speed at which the main wind turbines' production of electric power is at the desired level.

3. The energy production site according to any of the preceding claims, wherein, the desired level is one of:
- a maximum power rating of the energy production site;
- a maximum export system capability.

4. The energy production site according to any of the preceding claims, wherein the booster turbines' production of electrical power increases with wind speed within all of the second primary wind speed range

5. The energy production site according to any of the preceding claims, wherein the booster turbines' production of electrical power generally decreases with wind speed in the second secondary wind speed range, such that the booster turbines' production of electrical power is higher at a lowest wind speed boundary than at a highest wind speed boundary of the second secondary wind speed range.

6. The energy production site according to any of the preceding claims, wherein the booster turbines' production of electrical power decreases with wind speed in all of the second secondary wind speed range.

7. The energy production site according to any of the preceding claims, wherein the booster turbines' production of electrical power is added to the main turbines' electrical power production up to a combined electrical power production at the desired level.

8. The energy production site according to the preceding claim, wherein an upper limit of the second primary wind speed range is a lowest wind speed at which the combined electrical power production is at the desired level; and wherein a lower limit of the second secondary wind speed range is adjacent to the upper limit of the second primary wind speed range.

9. The energy production site according to any of the preceding claims, wherein the first primary wind speed range includes wind speeds of 5 m/s - 20 m/s or of 3 m/s - 25 m/s, and
wherein the second primary wind speed range includes wind speeds of 5 m/s - 8 m/s or of 3 m/s - 7 m/s or of 3 m/s - 9 m/s.

10. The energy production site according to any of the preceding claims, wherein the second secondary wind speed range includes wind speeds of 10 m/s - 12 m/s or of 10 m/s - 17 m/s or of 9 m/s - 25 m/s.

11. The energy production site according to any of the preceding claims, wherein the energy production site is an offshore windfarm.

12. The energy production site according to any of the preceding claims, wherein the first group of wind turbines comprises one or more horizontal axis wind turbines, each comprising:
- a nacelle mounted on a wind turbine tower,
- a rotor comprising one or more wind turbine blades describing a rotor diameter and
- an electrical generator driven by the rotor for converting rotation thereof into electrical power, and.
wherein the second group of wind turbines comprises one or more wind turbines, each comprising:
- a rotor comprising one or more wind turbine blades and
- an electrical generator driven by the rotor for converting rotation thereof into electrical power.

13. The energy production site according to any of claims 7-12, wherein, for the sake of longevity, the booster wind turbines are configured to produce electric power at wind speeds above the second primary range of operation, even if this power production is not needed for boosting the combined power production to reach the desired level at the time of production.

14. The energy production site according to any of claims 7-13, wherein electrical power produced by further power production facilities, the further power production facilities being different from wind power, is configured to also be used for controlling the resulting power production to reach the desired level, if the combined power production from the main wind turbines and the booster wind turbines is insufficient to reach the desired level.

15. The energy production site according to any of the preceding claims, further comprising an energy storage facility configured to store excess power production, which is in excess after boosting the resulting power production to reach the desired level at the time of production, and to deploy the stored energy again, when the resulting power production from the main wind turbines, the booster wind turbines and, if present, the further power production facilities, is insufficient to reach the desired level.

16. The energy production site according to any of the preceding claims, wherein for each main wind turbine one or more associated booster wind turbines is/are provided; and wherein one or more associated booster wind turbines, each of which potentially comprises an energy storage facility, are connected to a single main wind turbine at HVAC level by entry into the switch gear of the main wind turbine or, alternatively at DC level or at LVAC level.

17. A method of operating an energy production site to control production of electric power therein, comprising:
- operating a first group of wind turbines as main wind turbines,
- operating a second group of wind turbines as booster wind turbines,
- operating the main wind turbines to produce electrical power in all of a first primary wind speed range,
- operating the main wind turbines to produce electrical power up to a desired level,
- operating the booster wind turbines to produce electrical power in all of a second primary wind speed range and within a second secondary wind speed range, which is higher than and non-overlapping with said second primary wind speed range,
- operating the booster turbines' production of electrical power to increase with wind speed within the second primary wind speed range and to decrease with wind speed in the second secondary wind speed range.

18. The method according to claim 17, further comprising:
- deploying energy stored in the energy storage facility when the resulting power production from the wind turbines of the first group, the booster wind turbines and, if present, the further power production facilities, is insufficient to reach the desired level.
